Europäisches Patentamt

European Patent Office

Office européen des brevets

(11) Veröffentlichungsnummer : **0 387 401 B1**

(12) **EUROPÄISCHE PATENTSCHRIFT**

(45) Veröffentlichungstag der Patentschrift :
**08.02.95 Patentblatt 95/06**

(51) Int. Cl.⁶ : **H04N 7/24, H04N 7/32**

(21) Anmeldenummer : **89119320.3**

(22) Anmeldetag : **18.10.89**

(54) **Verfahren zur Gewinnung eines Änderungskriteriums für eine Bildsequenz sowie eine Anwendung des Verfahrens.**

(30) Priorität : **11.03.89 DE 3908028**

(43) Veröffentlichungstag der Anmeldung :
**19.09.90 Patentblatt 90/38**

(45) Bekanntmachung des Hinweises auf die
Patenterteilung :
**08.02.95 Patentblatt 95/06**

(84) Benannte Vertragsstaaten :
**CH DE ES FR GB IT LI NL SE**

(56) Entgegenhaltungen :
**EP-A- 0 225 181**
**GB-A- 2 050 752**

(56) Entgegenhaltungen :
**US-A- 4 591 908**
**PATENT ABSTRACTS OF JAPAN vol. 12, no.**
**420 (E-679)(3267) 08 November 1988, & JP-**
**A-63 157590 (NIPPON TELEGR & TELEPH**
**CORP) 30 Juni 1988,**

(73) Patentinhaber : **ANT Nachrichtentechnik**
**GmbH**
**Gerberstrasse 33**
**D-71522 Backnang (DE)**

(72) Erfinder : **Grotz, Karl-Heinz, Dipl.-Ing.**
**Wilhelmstrasse 25**
**D-7012 Fellbach (DE)**
Erfinder : **Mayer, Jörg, Dipl.-Ing.**
**Obere Waiblinger Strasse 120**
**D-7000 Stuttgart 50 (DE)**

**Beschreibung**

Die Erfindung betrifft ein Verfahren zur Gewinnung eines Änderungskriteriums für eine Bildsequenz sowie eine Anwendung des Verfahrens.

Um eine Bildsequenz mit niedriger Übertragungsrate, z.B. 64 kbit/s, übertragen zu können, ist es üblich vor der Übertragung eine Segmentierung des Bildes in - gegenüber einem zeitlich vorherigen Bild - veränderte und unveränderte Teile vorzunehmen.

Auf der Empfängerseite können die Bilder aus den nur einmal übertragenen unveränderten Teilen und einer laufend übertragenen Information über die veränderten Teile rekonstruiert werden.

Zur Segmentierung ist es bekannt, einen Änderungsdetektor zu verwenden, der seine Entscheidung auf der Basis der Bild-zu-Bild-Differenzen aufeinanderfolgender Bilder trifft. Um die durch Fehlereinflüsse wie Rauschen oder Quantisierungsfehler hervorgerufenen Änderungen zu unterdrücken, werden Änderungsdetektoren mit optimierter Entscheiderschwelle verwendet (Codierung von Fernsehsignalen für niedrige Übertragungsbitraten, J. Klie, Dissertation TU Hannover, 1978, Seiten 62 bis 69).

Beim Änderungsdetektor nach Klie s. o. werden die Bild-zu-Bild-Differenzen zur Ermittlung einer Entscheiderschwelle mehreren Schwellwertvergleichen unterzogen. Für benachbarte Bild-zu-Bild-Differenzen wird ein Mittelwert gebildet, der wiederum einem Schwellwertvergleich unterzogen wird. Eine der Schwellen für einen Schwellwertvergleich wird dabei oberhalb einer Wahrscheinlichkeitsschwelle für das Auftreten eines weißen gaußverteilten Rauschens angesetzt.

In der EP 154 125 A2 wird zur Einteilung eines Bildes in geänderte und nicht geänderte Bereiche ein Segmentierer verwendet. Es werden dort die Bild-Differenzen eines Fernsehsignals für drei aufeinanderfolgende entsprechende Bilder einer Bildsequenz ermittelt. Die Bild-Differenzsignale werden einer Schwellwert- und binären Begrenzerstufe zugeführt. Es werden zwei logische Variablen gewonnen, die Masken für unveränderte und geänderte Bereiche innerhalb von drei Bildern liefern.

Aufgabe der Erfindung ist es ein Verfahren zur Gewinnung eines Änderungskriteriums für eine Bildsequenz anzugeben, welches auch für gestörte Signale zuverlässig ist. Außerdem soll eine Anwendung des Verfahrens aufgezeigt werden. Diese Aufgabe wird bezüglich des Verfahrens durch die Schritte des Patentanspruchs 1 gelöst. Die Patentansprüche 2 bis 4 zeigen vorteilhafte Weiterbildungen des Verfahrens auf und der Patentanspruch 5 eine Anwendung des Verfahrens.

Die Erfindung beruht auf der Erkenntnis, daß ein Schwellwert für die Entscheidung ob in einer zeitlichen Bildsequenz örtliche Änderungen auftreten oder nicht sehr stark vom Rauschanteil des Quellsignals abhängig ist. So kann bei starkem Rauschen eine Änderung in einer Bildsequenz identifiziert werden, die im Quellsignal tatsächlich nicht auftritt. Die Schritte der Erfindung führen zu einem Änderungskriterium, welches sich selbst an die vorliegende Störung adaptiert und so zu keinen Fehlentscheidungen führt. Die Entscheidung ist gegenüber herkömmlichen nichtadaptiven Verfahren sehr zuverlässig. Das Verfahren nach der Erfindung ist universell verwendbar, d.h. für die Bildung der Differenzinformationen können die verschiedensten Wertemengen, wie z.B. Einzelbildpunkte, Blöcke von Bildpunkten, Kantenstrukturen verwendet werden.

Das Verfahren nach der Erfindung läßt sich vorteilhaft für Segmentierer zur Displacement-Schätzung verwenden aber auch für andere Zwecke, bei denen es auf die Erkennung geänderter bzw. bewegter Bereiche ankommt, z.B. bei der Verarbeitung von HDTV-Signalen, etwa gemäß EP 146 694 B1, oder bei Anwendungen zur Rauschunterdrückung z .B. in Videorecordern.

Anhand eines Ausführungsbeispiels und den Figuren wird die Erfindung nun näher erläutert. Es zeigen

Figur 1    ein Blockschaltbild zur Ermittlung des Änderungskriteriums,
Figur 2    die geglättete Häufigkeitsverteilung der Framedifferenzen

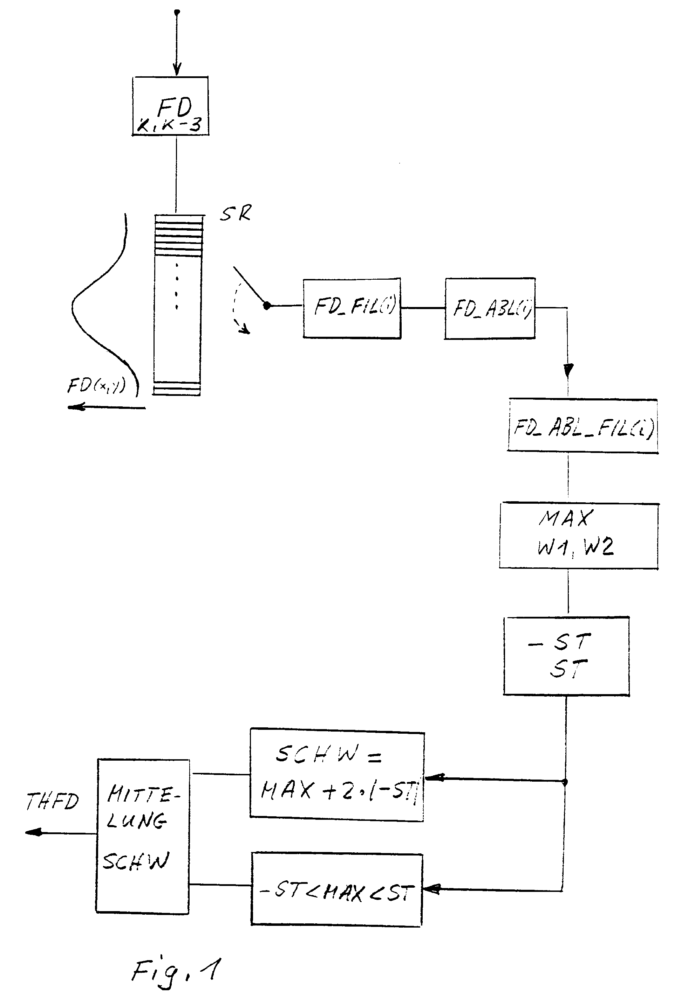

Zur Gewinnung eines Änderungskriteriums für eine Bildsequenz wird zuerst die Framedifferenz FD (Fig. 1) zwischen einem aktuellen Bild K der Bildsequenz und dem vorausgehenden Bild K-3 gebildet. Zur Differenzbildung werden die Luminanzamplituden I Bildpunkt (Pixel) für Bildpunkt in den bei den Bildern K und K-3 herangezogen. Von den Pixeldifferenzen $I_{K-3} - I_K$ wird der Absolutbetrag gebildet. Dann werden die Pixeldifferenzen innerhalb eines Blockes von 16 x 16 Bildpunkten aufsummiert. Bei einer Bildgröße von 352 x 288 Bildpunkten ergeben sich somit je 22 Blöcke in waagerechter Richtung und je 18 Blöcke in senkrechter Richtung also insgesamt 396 Blöcke.

Für die Framedifferenzen FD ergibt sich dann:

$$FD(x,y) = \sum_i \sum_j \left| I_{(k-3,x+i,y+j)} - I_{(k,x+i,y+j)} \right|$$

2

mit der Blockgröße i, j = 1,16
und den Blockadressen
x = 1,22 und y = 1,18.

Zu den 396 Framedifferenzinformationen wird nun eine Häufigkeitsverteilung im Bereich kleiner Werte erstellt. Hierzu können die ermittelten FD-Werte beispielsweise in ein Schieberegister SR eingelesen werden, auf dessen Zellen parallel zugegriffen werden kann. Unter kleinen Werten sind hier FD-Werte $\leq$ 1500 zu verstehen. Das Histogramm für FD-Werte $\leq$ 1500 nach Häufigkeiten geordnet erhält man nach folgender Beziehung:

$$FD\_TAB(FD) = \{ FD\_TAB(FD) + 1 \mid FD \leq FD_{max} \}$$

$FD_{max} = 1500$

Das Histogramm wird beispielsweise über 5 Bilder erstellt.

Das so gewonnene Histogramm enthält zuviele Unebenheiten um direkt ausgewertet werden zu können. Deshalb wird eine Glättung in Form einer einfachen Tiefpaßfilterung (Mittelung über 61 Stellen) vorgenommen. Durch die Tiefpaßfilterung der Histogramme wird eine ausreichende Monotonie erreicht:

$$FD\_FIL(i) = \sum_{j} FD\_TAB(i+j) \quad ; \quad j = -30, +30 \; ; \; i = 1,1500 \; (Fdmax)$$

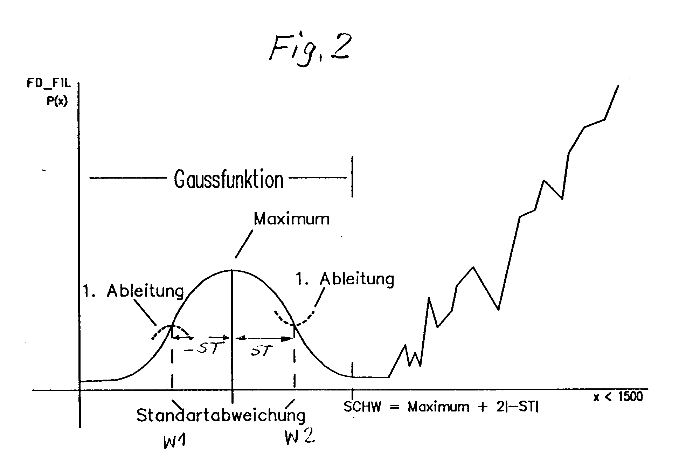

Dieses gefilterte Histogramm ist in Figur 2 dargestellt.
Es wird differenziert:

$$FD\_ABL(i) = FD\_FIL(i + 1) - FD\_FIL(i - 1) ; i = 1,1500$$

Die Ableitung FD_ABL wird ebenfalls gefiltert:

$$FD\_ABL\_FIL(i) = \sum_{j} FD\_ABL(i+j) \quad ; \quad j = -30, +30 \quad ; \quad i = 1,1500$$

Aus dem Histogramm FD_FIL wird nun das erste Maximum gesucht. In der gefilterten Ableitung wird das erste Maximum und das erste Minimum (Wendepunkte) gesucht.

Wie Figur 2 zeigt ist das Rauschen gaußverteilt. Der Abstand zwischen den beiden Wendepunkten W1 und W2 wird bei einer Häufigkeitsverteilung normalerweise als Standardabweichung bezeichnet. Da der Wendepunkt W2 vom Maximum ausgehend in Richtung höherer FD-Werte aber meist schon durch echte nicht durch Störungen vorgetäuschte Framedifferenzen beeinflußt ist, wird zur Bestimmung eines Entscheiderschwellwertes erfindungsgemäß nur der ausgehend vom Maximum in Richtung kleinerer FD-Werte nächstgelegene Wendepunkt W1 herangezogen. Der Abstand zwischen dem Maximum und dem unteren Wendepunkt W1 wird nachfolgend als "negative Standardabweichung" - ST und der Abstand zwischen dem Maximum und dem oberen Wendepunkt W2 als "positive Standardabweichung" ST bezeichnet. Zur Bestimmung des Entscheiderschwellwertes SCHW wird die negative Standardabweichung - ST folgendermaßen mit dem Maximum verknüpft:

$$SCHW = Maximum + 2 \bullet | - ST |$$

Da die Verteilung, wie zuvor beschrieben, über 5 Bilder erstellt wird, wird ein neuer Schwellwert mit 4 alten gemittelt. Die Mittelung der 5 Schwellwerte wird als Änderungskriterium THFD benutzt.

Mit der negativen Standardabweichung - ST und der positiven Standardabweichung ST und dem Maximum wird eine Plausibitätskontrolle durchgeführt.

Der neue Schwellwert ist dann gültig wenn gilt:
- ST < Maximum < ST.

Mit dem gewonnenen Änderungskriterium THFD läßt sich nun ein Segmenter mit adaptivem Schwellwert aufbauen, der sich automatisch auf Störsignale z.B. das Kamerarauschen einstellt. Auf diese Weise wird das Bild zuverlässig in geänderten und statischen Bildinhalt getrennt.

Das Schaltkriterium für den Segmenter kann folgendermaßen gewählt werden:

$$Seg = \begin{cases} 0 = \text{statisch} & FD \leq TH_{FD} \\ \\ 1 = \text{bewegt} & FD > TH_{FD} \end{cases}$$

## Patentansprüche

1. Verfahren zur Gewinnung eines Änderungskriteriums für eine Bildsequenz mit folgenden Schritten:
   a) Bilden von Differenzinformationen (FD) aus einem aktuellen Bild (K) und einem zeitlich vorausgehenden Bild (K-3) einer Bildsequenz, wie z.B. aus Einzelbildpunkten, Blöcken aus mehreren Bildpunkten, Kantenstrukturen ..., .
   b) Feststellen der Häufigkeit der einzelnen Differenzinformation und Bilden einer Häufigkeitsverteilung (FD_TAB (FD)),
   c) Glätten dieser Häufigkeitsverteilung (FD_FIL),
   d) Ermitteln des Maximums (MAX) dieser geglätteten Häufigkeitsverteilung im Bereich von Werten, die auf Rauschen zurückzuführen sind,
   e) Feststellen des diesem Maximum (MAX) in Richtung kleinerer Werte der geglätteten Häufigkeitsverteilung (FD_FIL) nächstgelegenen Wendepunktes (W1),
   f) Ermitteln des Abstandes (- ST) zwischen diesem Wendepunkt (W1) und dem Maximum (MAX),
   g) Verknüpfen des Maximums (MAX) und des ermittelten Abstandes (- ST) zwischen Wendepunkt (W1) und Maximum zu einem Entscheiderschwellwert (SCHW),
   h) Ermitteln mindestens eines weiteren Entscheiderschwellwertes auf vorgenannte Weise, jedoch nun unter Zugrundelegung einer Häufigkeitsverteilung bzw. von Häufigkeitsverteilungen , die aus zeitlich anderen Differenzinformationen gewonnen ist bzw. sind,
   i) Mittelung der Entscheiderschwellwerte zur Gewinnung eines Änderungskriteriums.

2. Verfahren nach Anspruch 1, gekennzeichnet durch folgende Schritte:
   - Feststellen des dem Maximum (MAX) in Richtung größerer Werte der geglätteten Häufigkeitsverteilung nächstgelegenen weiteren Wendepunktes (W2),
   - Ermitteln des Abstandes (ST) zwischen diesem weiteren Wendepunkt (W2) und dem Maximum (MAX),
   - Durchführen einer Plausibilitätskontrolle für das Änderungskriterium anhand der Abstände vom Maximum (MAX) zu den beiden Wendepunkten (W1, W2).

3. Verfahren nach Anspruch 1 oder 2, dadurch gekennzeichnet daß das Verknüpfen des Maximums (MAX) und des Abstandes (- ST) zwischen Wendepunkt (W1) und Maximum gemäß Merkmal g) nach folgender Beziehung vorgenommen wird;
$$SCHW = MAX + 2 \bullet | - ST |,$$
   wobei SCHW den Entscheiderschwellwert, MAX das ermittelte Maximum der geglätteten Häufigkeitsverteilung und - ST den Abstand zwischen Maximum und dem in Richtung kleinerer Werte nächstgelegenen Wendepunkt (W1) bezeichnet.

4. Verfahren nach einem der Ansprüche 1 bis 3, gekennzeichnet durch die Ermittlung der Differenzinformationen gemäß Merkmal a) mit folgenden Schritten:
   - Bilden von Absolutwerten der Bildhelligkeitsdifferenzen von Bildpunkten,
   - Aufsummieren dieser Absolutwerte.

5. Anwendung des Verfahrens zur Gewinnung des Änderungskriteriums nach einem der Ansprüche 1 bis 4 in einem Bild-Segmenter zur Trennung von geändertem und statischem Bildinhalt bezüglich einem aktuellen Bild und einem zeitlich vorausgehenden Bild einer Bildsequenz.

## Claims

1. Method for obtaining a change criterion for an image sequence, with the following steps:

   a) Forming difference information data (FD) from an actual image (K) and an image (K-3) preceding in time of an image sequence, such as for example individual dots, blocks of several dots, edge structures and so forth,

   b) ascertaining the frequency of the individual information data and forming a frequency distribution (FD_TAB(FD)),

   c) smoothing this frequency distribution (FD_FIL),

   d) ascertaining the maximum (MAX) of this smoothed frequency distribution in the region of values which are to be traced back to noise,

   e) ascertaining the turning point (W1) lying nearest this maximum (MAX) in the direction of smaller values of smoothed frequency distribution (FD_FIL),

   f) ascertaining the spacing (-ST) between this turning point (W1) and the maximum (MAX),

   g) logically interlinking the maximum (MAX) and the ascertained spacing (-ST) between the turning point (W1) and the maximum (MAX) into a decider threshold (SCHW),

   h) ascertaining at least one further decider threshold in the aforementioned manner, however now on the basis of a frequency distribution or of frequency distributions, which is or are obtained from difference information data of different time, and

   i) averaging the decider threshold values to obtain the change criterion.

2. Method according to claim 1, characterised by the following steps:
   - Ascertain the further turning point (W2) lying nearest the maximum (MAX) in the direction of greater values of the smoothed frequency distribution,
   - ascertaining, the spacing between this further turning point (W2) and the maximum (MAX) and
   - performing a plausibility check for the change criterion with the aid of the spacings of both the turning points (W1, W2) from the maximum (MAX).

3. Method according to claim 1 or 3, characterised thereby, that the logical interlinking of the maximum (MAX) and the spacing (-ST) between the turning point (W1) and the maximum (MAX) according to feature (g) is undertaken according to the following relationship:

$$SCHW = MAX + 2.| - ST|,$$

   wherein SCHW denotes the decider threshold value, MAX the ascertained maximum of the smoothed frequency distribution and -ST the spacing between the maximum and the turning point (W1) lying nearest in the direction of smaller values.

4. Method according to one of the claims 1 to 3, characterised by the ascertaining of the difference information data according to feature (a) with the following steps:
   - Forming absolute values of the image brightness differences of dots and
   - adding up these absolute values.

5. Application of the method for obtaining the change criterion according to one of the claims 1 to 4 in an image segmenter for the separation of changed and static image content in respect of an actual image and an image preceding in time of an image sequence.

## Revendications

1. Procédé d'obtention d'un critère de changement pour une séquence d'images, comprenant les étapes suivantes:

   a) formation d'informations de différences (FD) à partir d'une image actuelle (K) et d'une image (K-3) la précédant dans le temps à l'intérieur d'une séquence d'images, comme par exemple de différences de points d'image individuels, de blocs de plusieurs points d'image, de structures de bords...,

   b) établissement de la fréquence des diverses informations de différences et formation d'une distribution de fréquence (FD_TAB (FD)),

   c) lissage de cette distribution de fréquence (FD_FIL),

   d) détermination du maximum (MAX) de cette distribution de fréquence lissée dans le domaine de valeurs qui sont à attribuer à du bruit,

e) établissement du point d'inflexion (W1) situé le plus proche de ce maximum (MAX) en direction de plus petites valeurs de la distribution de fréquence lissée (FD_FIL),

f) détermination de la distance (- ST) entre ce point d'inflexion (W1) et le maximum (MAX),

g) combinaison du maximum (MAX) et de la distance (- ST) déterminée entre le point d'inflexion (W1) et le maximum pour produire un seuil de décision (SCHW),

h) détermination d'au moins un seuil de décision supplémentaire de la manière qui vient d'être indiquée, mais cette fois-ci sur la base d'une distribution de fréquence ou de distributions de fréquences qui est ou sont obtenue(s) à partir d'informations de différences qui sont temporellement autres, et

i) établissement de la moyenne des seuils de décision pour obtenir le critère de changement.

2.  Procédé selon la revendication 1, caractérisé par les étapes suivantes:
    - établissement du point d'inflexion supplémentaire (W2) situé le plus près du maximum (MAX) en direction de plus grandes valeurs de la distribution de fréquence lissée
    - détermination de la distance (ST) entre ce point d'inflexion supplémentaire (W2) et le maximum (MAX) et
    - exécution d'un test de plausibilité pour le critère de changement à l'aide des distances séparant le maximum (MAX) des deux points d'inflexion (W1, W2).

3.  Procédé selon la revendication 1 ou 2, caractérisé en ce que la combinaison du maximum (MAX) et de la distance (- ST) entre le point d'inflexion (W1) et le maximum, selon l'étape g), est effectuée selon la relation suivante:

$$SCHW = MAX + 2 \cdot \mid - ST \mid,$$

où SCHW désigne le seuil de décision, MAX désigne le maximum déterminé de la distribution de fréquence lissée et - ST désigne la distance entre le maximum et le point d'inflexion (W1) situé le plus près en direction de plus petites valeurs.

4.  Procédé selon une des revendications 1 à 3, caractérisé en ce que la détermination des informations de différences, selon l'étape a), comprend les étapes suivantes:
    - formation de valeurs absolues des différences de luminosité d'image de points d'image et
    - totalisation de ces valeurs absolues.

5.  Application du procédé d'obtention d'un critère de changement selon une des revendications 1 à 4 dans un segmenteur d'image servant à séparer le contenu d'image changé du contenu d'image statique d'une image actuelle par rapport à une image qui la précède dans le temps à l'intérieur d'une séquence d'images.

$FD_{x,k-3}$

$SR$

$FD(x,y)$

$FD\_FIL(i)$

$FD\_ABL(i)$

$FD\_ABL\_FIL(i)$

$MAX$
$W1, W2$

$-ST$
$ST$

$SCHW =$
$MAX + 2 \cdot |-ST|$

$-ST < MAX < ST$

$THFD$

MITTE-
LUNG

$SCHW$

Fig. 1

Fig. 2

EP 0 387 401 B1